# EUROPÄISCHE PATENTSCHRIFT

(11) **EP 1 245 837 B1**
(45) Veröffentlichungstag und Bekanntmachung des Hinweises auf die Patenterteilung: **25.01.2006**
(21) Anmeldenummer: 02003809.7
(22) Anmeldetag: 20.02.2002
(51) Int. Cl.: F16B 7/18, E03D 11/14

(54) **Vorrichtung zum Einstellen der Distanz zwischen zwei Teilen**
Device for adjusting the distance between two elements
Dispositif de réglage de la distance entre deux pièces

(30) Priorität: 26.03.2001 DE 10114885
(43) Veröffentlichungstag der Anmeldung: 02.10.2002
(73) Patentinhaber: Georg Fischer Schwab GmbH & Co. KG, 72793 Pfullingen (DE)
(72) Erfinder: Steinhart, Axel, 72574 Bad Urach (DE); Görlich, Arno, 72639 Neuffen (DE)
(74) Vertreter: Weiss, Wolfgang

(56) Entgegenhaltungen:
- EP-A- 0 663 480
- EP-A- 0 731 225
- DE-A- 2 918 646

## Beschreibung

Die Erfindung betrifft eine Vorrichtung zum Einstellen der horizontalen Distanz zwischen zwei Teilen, vorzugsweise von zwei vertikalen Rahmenteilen einer Rahmenkonstruktion für Sanitärelemente.

Im Sanitärbereich werden für den Leicht- und Trockenbau üblicherweise Rahmenkonstruktionen verwendet, die sich aus der Anordnung horizontaler und vertikaler Profilstücke (z.B. Vierkant- oder C-Profile) ergeben, an die verschiedene Sanitärinstallationen, wie z.B. ein Spülkasten, angebracht werden können. Der horizontale Abstand zweier vertikaler Rahmenprofile und damit insbesondere die Tiefe der Rahmenkonstruktion sind durch die vom Hersteller bereitgestellten horizontalen Profilstücke fest vorgegeben. Eine individuelle Einstellung der Tiefe der Rahmenkonstruktion erst vor Ort ist folglich nicht möglich.

Aus der EP 979905-A1, die den Oberbegriff des Anspruchs 1 definiert, ist eine Vorrichtung zum Verbinden von zwei Profilschienen bekannt. Mittels unterschiedlich ausgebildeten Haltekrallen können parallel zu den Profilschienen Verbindungsprofile festgespannt werden. Jeweils zwei Verbindungsprofile werden mittels Verbindungsschienen verbunden. Die Verbindungsprofile weisen dazu jeweils ein Gelenk und einen Schlitz auf. Das erste Ende der Verbindungsschiene ist mit dem Gelenk des ersten Verbindungsprofils verbunden. Das zweite Ende ist verschiebbar und feststellbar in dem Schlitz des zweiten Verbundungsprofils angeordnet. Die Verbindungsschienen sind auf halber Länge koppelbar miteinander verbunden.

Aus der DE 2918648-A1 ist ein Hubpodium für den Bühnenbau bekannt. Das Hubpodium ist durch Scheren in der Höhe und Neigung verstellbar. Zwei Scherenarme kreuzen sich, wobei die Scherenachse ausserhalb des Kreuzungspunktes festgestellt werden kann. Die Scherenachse wird von einem bogenförmigen Führungselement auf einem Kreisbogen um den Anlenkpunkt eines der Scherenarme festgestellt.

Es ist daher die Aufgabe der Erfindung, eine Vorrichtung der eingangs genannten Art derart weiterzubilden, dass die Distanz zwischen zwei Teilen möglichst stufenlos einstellbar ist und dennoch bei jeder eingestellten Distanz keine Vorrichtungsteile über die zwei miteinander verbundenen Teile nach außen überstehen.

Diese Aufgabe wird erfindungsgemäß durch eine Vorrichtung gelöst, die einen bogenförmigen Distanzbügel mit einem entsprechend bogenförmigen Langloch umfasst, wobei der Distanzbügel an beiden Teilen in dem Langloch drehbar gelagert und feststellbar ist.

Mit der erfindungsgemäßen Vorrichtung kann der Abstand der beiden Teile über das Langloch im Distanzbügel, stufenlos zwischen einer minimalen und einer maximalen Distanz eingestellt werden, wobei der Distanzbügel aufgrund seiner Bogenform über die beiden miteinander verbundenen Teile nicht vorsteht:

Vorzugsweise ist der Distanzbügel an beiden Teilen jeweils über eine das Langloch durchgreifende Schraubverbindung drehbar gelagert und feststellbar.

Auch dadurch, dass die beiden Lagerstellen des Distanzbügets an den beiden Teilen rechtwinklig zur überbrückten Distanz gegeneinander versetzt angeordnet sind, kann zusätzlich sichergestellt werden, dass der Distanzbügel nicht über die beiden miteinander verbundenen Teile übersteht.

Bei einer Ausführungsform der Erfindung ist das Langloch durch einen Steg, insbesondere in ein kreisrundes Loch und in ein Langloch, unterteilt. Der Distanzbügel ist am einen Teil über das kreisrunde Loch fest, d.h. unverstellbar gelagert und nur am anderen Teil über das Langloch distanzmäßig versteilbar.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: eine efindungsgemäße Vorrichtung mit einem eine mittlere Distanz zwischen zwei Teilen überbrückenden Distanzbügel;
- Fig. 2: die Vorrichtung der Fig. 1, wobei der Distanzbügel auf seine maximale Distanz eingestellt ist; und
- Fig. 3: die Vorrichtung der Fig. 1, wobei der Distanzbügel auf seine minimale Distanz eingestellt ist.

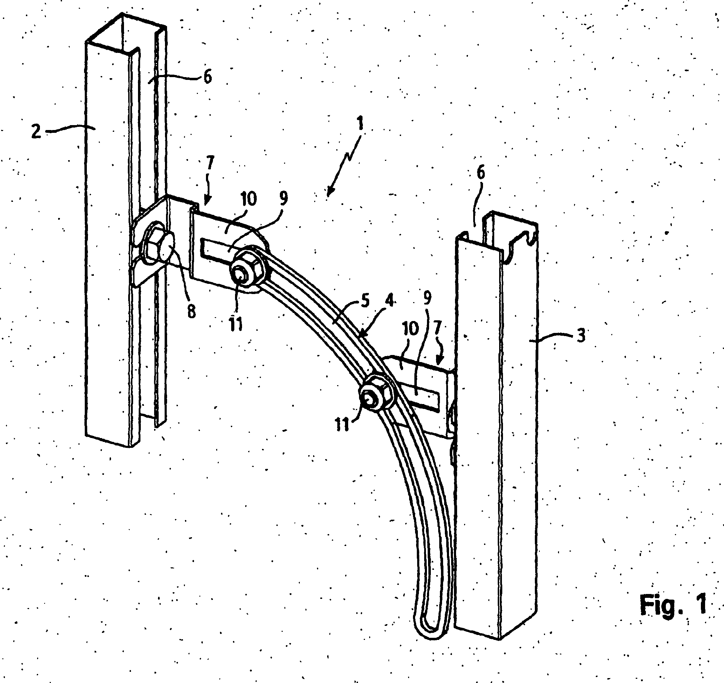

Die in **Fig. 1** insgesamt mit **1** bezeichnete Vorrichtung dient zum Einstellen der horizontalen Distanz zwischen zwei vertikalen Teilen **2, 3** mittels eines kreisbogenförmigen Distanzbügels **4.** Der Distanzbügel 4 hat ein sich über seine gesamte Länge entsprechend kreisbogenförmig erstreckendes Langloch **5** und ist an beiden Teilen **2, 3** in dem Langloch **5** drehbar gelagert und feststellbar.

Im gezeigten Ausführungsbeispiel sind beide Teile **2, 3** Bestandteil einer Rahmenkonstruktion für Sanitärelemente und als vertikal ausgerichtete C-Profile mit einander zugewandten Schlitzen **6** ausgebildet. In diesen Schlitzen **6** ist jeweils ein Winkelelement **7** in Profillängsrichtung verschiebbar geführt und über eine Klemmschraube **8** feststellbar. Der Distanzbügel 4 ist jeweils über eine das Langloch 5 und ein Loch **9** im freien Schenkel **10** des Winkelelements 7 durchgreifende Schraubverbindung **11** an den Winkelelementen 7 drehbar gelagert und feststellbar. Dazu sind die beiden Teile 2, 3 zueinander so ausgerichtet, dass die freien Schenkel 10 der beiden auf unterschiedlicher Höhe angeordneten Winkelelemente 7 in einer gemeinsamen Vertikalebene liegen.

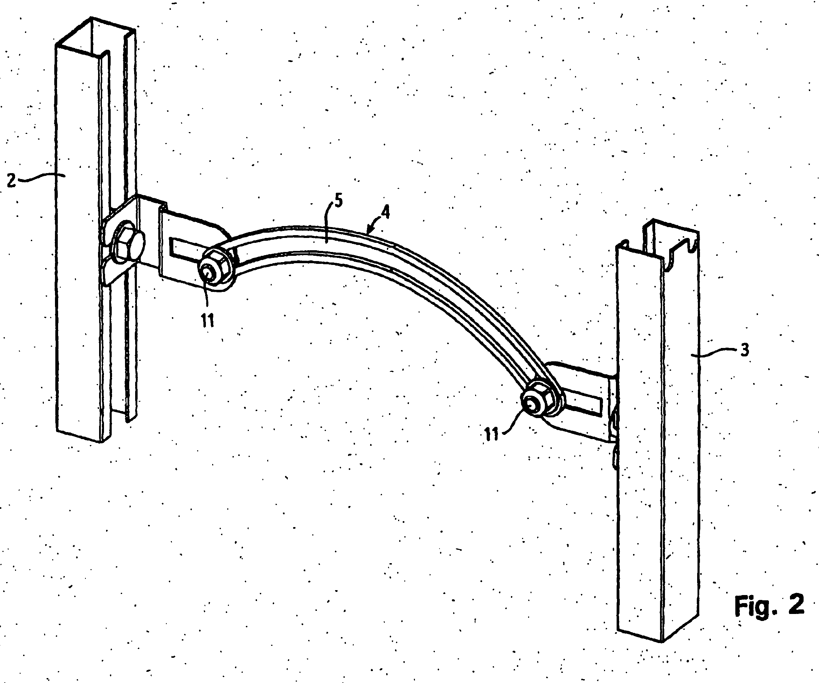

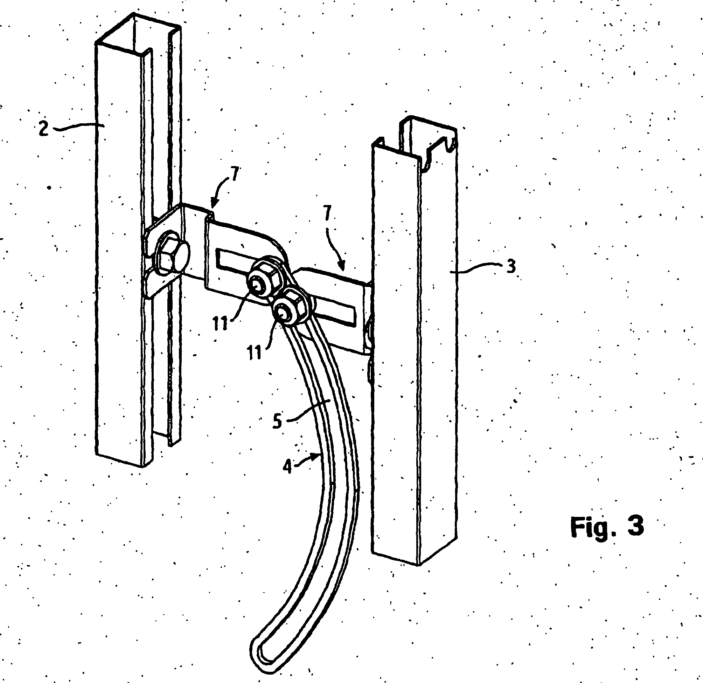

In Fig. 1 durchgreift die eine Schraubverbindung 11 das Langloch 5 am einen Ende und die andere Schraubverbindung 11 das Langloch 5 etwa in der Mitte, so dass mit dem Distanzbügel 5 eine mittlere Distanz zwischen den beiden Teilen 2, 3 überbrückt wird. In **Fig. 2** durchgreifen beide Schraubverbindungen 11 das Langloch 5 jeweils an den Enden, so dass der Distanzbügel 4 auf seine maximale Distanz eingestellt ist. In **Fig. 3** durchgreifen beide Schraubverbindungen 11 das Langloch 5 nebeneinander am gleichen Ende, so dass der Distanzbügel 4 auf seine minimale Distanz eingestellt ist. Bei jeder eingestellten Distanz steht der Distanzbügel 4 aufgrund seiner Bogenform über die beiden miteinander verbundenen Teile 2, 3 nicht vor.

## Patentansprüche

1. Vorrichtung (1) zum Einstellen der horizontalen Distanz zwischen zwei Teilen (2,3) einer Rahmenkonstruktion für Sanitärelemente, umfassend die als vertikal ausgerichtete Rahmenprofile ausgebildeten Teile (2,3), und einen Distanzbügel (4) **dadurch gekennzeichnet, dass** der Distanzbügel (4) bogenförmig ist und ein entsprechend bogenförmiges Langloch (5) aufweist, und dass der Distanzbügel (4) an beiden Teilen (2,3) in dem Langloch (5) drehbar gelagert und feststellbar ist.

2. Vorrichtung nach Anspruch 1, **dadurch gekennzeichnet, dass** der Distanzbügel (4) an beiden Teilen (2, 3) jeweils über eine das Langloch (5) durchgreifende Schraubverbindung (11) drehbar gelagert und feststellbar ist.

3. Vorrichtung nach Anspruch 1 oder 2, **dadurch gekennzeichnet, dass** die beiden Lagerstellen des Distanzbügels (4) gegeneinander versetzt sind.

4. Vorrichtung nach einem der vorhergehenden Ansprüche, **dadurch gekennzeichnet, dass** das Langloch (5) durch einen Steg, insbesondere in ein kreisrundes Loch und in ein Langloch, unterteilt ist.

## Claims

1. Device (1) for adjusting the horizontal distance between two elements (2, 3) of a frame construction for sanitary elements, comprising the elements (2, 3) designed as vertically oriented frame profiles and a distance bow (4), **characterized in that** the distance bow (4) is curved and has a correspondingly curved elongate hole (5), and **in that** the distance bow (4) is rotatably mounted and securable on both elements (2, 3) in the elongate hole (5).

2. Device according to Claim 1, **characterized in that** the distance bow (4) is rotatably mounted and securable on both elements (2, 3) in each case via a bolted connection (11) extending through the elongate hole (5).

3. Device according to Claim 1 or 2, **characterized in that** the two mounting locations of the distance bow (4) are staggered in relation to one another.

4. Device according to one of the preceding claims, **characterized in that** the elongate hole (5) is subdivided by a web, in particular into a circular hole and an elongate hole.

## Revendications

1. Dispositif (1) pour ajuster la distance horizontale entre deux pièces (2, 3) d'une construction de cadre pour des éléments sanitaires, comprenant les pièces (2, 3) réalisées sous forme de profilés de cadre orientés verticalement, et une bride d'espacement (4), **caractérisé en ce que** la bride d'espacement (4) est de forme courbe et présente un trou oblong (5) de courbure correspondante, et **en ce que** la bride d'espacement (4) est montée à rotation et peut être fixée sur les deux pièces (2, 3) dans le trou oblong (5).

2. Dispositif selon la revendication 1, **caractérisé en ce que** la bride d'espacement (4) est montée à rotation et peut être fixée sur les deux pièces (2, 3) à chaque fois par le biais d'une connexion visée (11) traversant le trou oblong (5).

3. Dispositif selon la revendication 1 ou 2, **caractérisé en ce que** les deux positions de support de la bride d'espacement (4) sont décalées l'une par rapport à l'autre.

4. Dispositif selon l'une quelconque des revendications précédentes, **caractérisé en ce que** le trou oblong (5) est divisé par une âme, notamment en un trou rond circulaire et en un trou oblong.
